**Europäisches Patentamt**

**European Patent Office**

**Office européen des brevets**

(19)

(11) Veröffentlichungsnummer : **0 078 383**
**B1**

(12) **EUROPÄISCHE PATENTSCHRIFT**

(45) Veröffentlichungstag der Patentschrift :
28.11.84

(51) Int. Cl.³ : **B 23 Q 11/00**

(21) Anmeldenummer : **82108409.2**

(22) Anmeldetag : **11.09.82**

(54) **Einrichtung zum Absaugen eines Schneidspans.**

(30) Priorität : **24.10.81 DE 3142206**

(43) Veröffentlichungstag der Anmeldung :
**11.05.83 Patentblatt 83/19**

(45) Bekanntmachung des Hinweises auf die Patenterteilung : **28.11.84 Patentblatt 84/48**

(84) Benannte Vertragsstaaten :
**AT BE CH DE FR GB IT LI LU NL SE**

(56) Entgegenhaltungen :
**DE-A- 1 522 989**
**FR-A- 2 181 041**
**GB-A-   388 023**
**US-A- 2 059 263**
**US-A- 3 835 262**

(73) Patentinhaber : **TELDEC Schallplatten GmbH**
**Heussweg 25**
**D-2000 Hamburg 20 (DE)**

(72) Erfinder : **Redlich, Horst**
**Plassstrasse 3a**
**D-1000 Berlin 37 (DE)**

(74) Vertreter : **Einsel, Robert, Dipl.-Ing.**
**Theodor-Stern-Kai 1**
**D-6000 Frankfurt/Main 70 (DE)**

EP 0 078 383 B1

**Beschreibung**

Die Erfindung betrifft eine Einrichtung zum Absaugen eines Schneidspans beim Schneiden einer Information in einen Schneidträger, insbesondere einen metallischen Schneidträger, nach dem Oberbegriff des Anspruchs 1, entsprechend der FR-A 2 181 041.

Beim Schneiden von Signalen in ebene, plattenförmige Aufzeichnungsträger wird der durch den Schneidvorgang entstehende Span im allgemeinen mittels Luft abgesaugt. Beim Schneiden in Wachsplatten oder in Lackfolien, die üblicherweise auf einem Aluminiumträger aufgebracht sind, läßt sich der Span verhältnismäßig leicht und betriebssicher abführen, da der Span elastisch genug ist.

Beim Schneiden in metallische Träger, vorzugsweise Kupferträger, ist es gegenüber dem Schneiden in Lackfolien nicht möglich, mit dem üblichen Saugdruck den Span einwandfrei abzuführen. Ein Kupferspan ist sehr viel härter und fester als ein Lackfolienspan. Der Saugdruck zur Abführung des Spans muß bei metallischen Aufzeichnungsträgern daher sehr viel höher gewählt werden.

Ein hoher Saugdruck verursacht jedoch an der Eintrittsstelle in das Absaugrohr ein Geräusch, das wegen der Nähe des Absaugrohres zum Schneidstichel sich der aufzuzeichnenden Modulation überlagern kann. Die Modulation kann daher durch das Rauschen der Saugluft gestört werden.

Es ist daher Aufgabe der Erfindung, eine Einrichtung anzugeben, die eine störende Überlagerung des Absauggeräusches auf die aufzuzeichnende Modulation verhindert.

Die Aufgabe wird durch die im Anspruch 1 angegebene Erfindung gelöst. Weitergehende Merkmale der Erfindung sind in den Unteransprüchen beschrieben.

Mit Hilfe der Erfindung ergibt sich keine störende Überlagerung des Absauggeräusches auf die Modulation. Bei leisen Passagen der Modulation wird der Saugdruck so gesteuert, daß er geringer ist als bei lauten Modulationspassagen. Durch die Abhängigkeit des Saugdrucks von der Tiefenschriftkomponente ergibt sich eine dynamikabhängige Steuerung der Saugluft.

Die Erfindung wird nachstehend an Hand eines Ausführungsbeispiels näher beschrieben. Es zeigen :

Figur 1 eine Anordnung von Schneidstichel und Luftröhrchen,

Figur 2 eine Darstellung der Abhängigkeit des Saugdrucks von der Schneidtiefe.

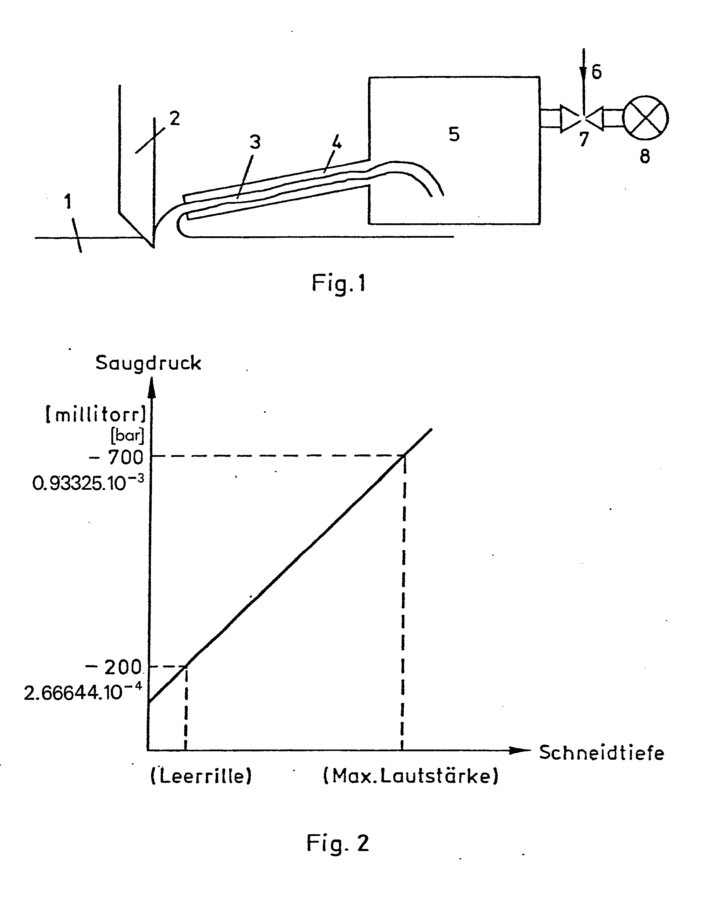

In den in Fig. 1 dargestellten Aufzeichnungsträger 1 wird mit einem Schneidstichel 2 eine modulierte Rille eingeschnitten. Der dabei entstehende Span 3 wird unmittelbar am Schneidstichel durch Saugluft in ein Röhrchen 4 abgesaugt. An der Eintrittöffnung 5 des Röhrchens 4 entsteht ein Rauschen, das wegen der unmittelbaren Nähe des Schneidstichels 2 zum Röhrchen 4 auf den Schneidstichel 2 übertragen wird und damit auf die Modulation Einfluß nimmt. Ohne die erfindungsgemäße Einrichtung würde das Rauschen in der Größenordnung von drei bis vier dB über dem Grundgeräusch des Aufzeichnungsträgers liegen.

Bei einer üblichen Schallaufzeichnung nach dem Füllschriftverfahren wird der Vorschub und die mittlere Schneidtiefe in Abhängigkeit von der kommenden Modulation gesteuert. Hierbei erfolgt die Steuerung durch Abnahme der Modulation durch einen zusätzlichen Kopf des Magnetbandgerätes, von dem die Aufzeichnung überlicherweise auf den Schneidstichel übertragen wird. Der zusätzliche Kopf befindet sich zeitlich etwa eine halbe bis eine Umdrehung des Aufzeichnungsträgers vor dem Kopf, der die Modulation für den Schneidstichel abnimmt, so daß bei einer Änderung der Amplitude der Aufzeichnung der Vorschub und die mittlere Schneidtiefe auf die kommende Amplitude angepaßt wird.

Bei der erfindungsgemäßen Einrichtung wird die Steuergröße 6 zur Steuerung der mittleren Schneidtiefe zusätzlich zur Steuerung der Absaugluft verwendet. Bei großer Schneidtiefe entsteht ein dicker Span 3, an dem mehr gezogen werden muß, als bei einem dünnen Span bei einer geringen Schneidtiefe. Das bedeutet gleichzeitig, das ein dünner Span an einer Stelle mit geringer Amplitude und ein dicker Span an einer Stelle mit großer Amplitude entsteht. Bei einem lauten Signal wird damit der Saugdruck erhöht, bei einem leisen Signal erniedrigt. Damit kann sich das Rauschen, das bei starkem Saugdruck entsteht, nur auf laute Stellen in der Aufzeichnung auswirken, wobei es aber wegen des Verdeckungseffektes nicht hörbar ist.

In Fig. 2 ist die Abhängigkeit des Saugdrucks von der Schneidtiefe dargestellt. Auf der vertikalen Achse ist der Saugdruck, auf der horizontalen Achse die Schneidtiefe dargestellt. Während leiser Passagen und während Leerrillen beträgt der Saugdruck etwa $-2,66644 \cdot 10^{-4}$ bar ($-200$ Millitorr). In diesem Fall ist die Schneidtiefe sehr gering. Bei einer lauten Aufzeichnungspassage, das heißt bei großer Schneidtiefe, beträgt der Saugdruck etwa $-0,93325 \cdot 10^{-3}$ bar ($-700$ Millitorr).

Die Steuergröße 6 wird auf ein steuerbares Ventil 7 geführt, mit dem der Saugdruck einer mit konstantem Saugdruck arbeitenden Pumpe 8 gesteuert wird. Es ist auch möglich, eine regelbare Pumpe zu verwenden.

Der Behälter 5 zur Ablage des Schneidspans 3 befindet sich vorteilhaft möglichst nahe am Schneidstichel, da ein metallischer Span nur über eine kurze Wegstrecke durch das Absaugrohr geführt werden kann, ohne daß bei großer Tiefenschriftmodulation durch Änderung der Spandicke Störungen im Spanablauf auftreten. Die Länge des Absaugrohres soll 100 mm nicht überschreiten.

Durch die Steuerung des Saugdrucks ergibt sich noch der Vorteil, daß der Radius des Schneidspans an der Schneidstelle von der Dicke des Schneidspans abhängt. Dadurch ist gewährleistet, daß kein Knicken des Spans auftritt, welches sich auf die Modulation übertragen und stören würde.

## Ansprüche

1. Einrichtung zum gesteuerten Absaugen eines Schneidspans beim Schneiden einer Information in einen Schneidträger (1), insbesondere in einen metallischen Schneidträger, bei dem der Schneidspan (3) in unmittelbarer Nähe des Schneidstichels (2) durch Saugluft abgeführt wird, dadurch gekennzeichnet, daß der Druck der Saugluft in Abhängigkeit von der Tiefenschriftkomponente der Aufzeichnung gesteuert wird.

2. Einrichtung nach Anspruch 1, dadurch gekennzeichnet, daß die Steuergröße (6) zur Steuerung der Saugluft von der Steuergröße zur Steuerung des Vorschubs des Schneidstichels (2) abgeleitet wird.

3. Einrichtung nach Anspruch 1, dadurch gekennzeichnet, daß die Größe des Saugdrucks − 1,33322 · 10⁻⁴ bis − 1,06657 · 10⁻³ bar (− 100 bis − 800 Millitorr) beträgt.

4. Einrichtung nach Anspruch 1, dadurch gekennzeichnet, daß die Steuergröße (6) zur Steuerung des Saugdrucks auf ein steuerbares Ventil (7) geführt ist, das den Saugdruck einer mit konstantem Saugdruck arbeitenden Saugpumpe (8) steuert.

5. Einrichtung nach Anspruch 4, dadurch gekennzeichnet, daß zur Steuerung des Saugdrucks eine regelbare Pumpe verwendet wird.

6. Einrichtung nach Anspruch 1, dadurch gekennzeichnet, daß ein Behälter (5) zur Ablage des Schneidspans (3) möglichst nahe dem Schneidstichel (2) angeordnet ist.

7. Einrichtung nach Anspruch 1, dadurch gekennzeichnet, daß die Länge des Absaugrohres 100 mm nicht überschreitet.

8. Einrichtung nach Anspruch 1, dadurch gekennzeichnet, daß der Druck der Saugluft in Stufen von der Tiefenschriftkomponente gesteuert wird.

9. Einrichtung nach Anspruch 8, dadurch gekennzeichnet, daß der geringste Absolut-Druck bei einer großen Tiefenschriftkomponente, der größte Absolut-Druck bei einer Leerrille der Aufzeichnung verwendet wird (Fig. 2).

10. Einrichtung nach Anspruch 9, dadurch gekennzeichnet, daß drei Stufen verwendet sind.

## Claims

1. Arrangement for the controlled removal by suction of a swarf when cutting information in a cuttable carrier (1), especially in a metallic cuttable carrier, in which the swarf (3) is extracted in immediate vicinity of the cutting stylus (2) by means of suction, characterized in that the strength of the suction is controlled in dependence upon the depth of inscription component of the recording.

2. Arrangement according to Claim 1, characterized in that the control magnitude (6) for controlling the suction is derived from the control magnitude for controlling the pressure of the cutting stylus (2).

3. Arrangement according to Claim 1, characterized in that the magnitude of the suction equals − 1.33322 · 10⁻⁴ to − 1.06657 · 10⁻³ bar (− 100 to − 800 millitorr).

4. Arrangement according to Claim 1, characterized in that the control magnitude (6) for controlling the suction is applied to a controllable valve (7) which controls the suction of a suction pump (8) which works at a constant suction.

5. Arrangement according to Claim 4, characterized in that a regulatable pump is used for the control of the suction.

6. Arrangement according to Claim 1, characterized in that a container (5) is arranged for the collection of the swarf (3) as near as possible to the cutting stylus (2).

7. Arrangement according to Claim 1, characterized in that the length of the suction tube does not exceed 100 mm.

8. Arrangement according to Claim 1, characterized in that the pressure of the suction is controlled in steps by the depth of inscription component.

9. Arrangement according to Claim 8, characterized in that the minimum absolute pressure is used on the occurrence of a large depth of inscription component and the maximum absolute pressure is used with a blank groove of the recording (Fig. 2).

10. Arrangement according to Claim 9, characterized in that three steps are used.

## Revendications

1. Dispositif pour l'aspiration d'un copeau de gravure lors de la gravure d'une information sur un support de gravure (1), en particulier sur un support métallique de gravure, où le copeau de gravure (3) est évacué par l'air en dépression au voisinage immédiat du burin de gravure (2), caractérisé en ce que la dépression de l'air aspiré est commandée en fonction de la composante de profondeur de la gravure de l'enregistrement.

2. Dispositif selon la revendication 1, caractérisé en ce que la grandeur (6) de commande de l'air aspiré dérive de la grandeur de commande de l'avance du burin de gravure (2).

3. Dispositif selon la revendication 1, caractérisé en ce que la valeur de la dépression est de − 1,33322 · 10⁻⁴ à 1,06657 · 10⁻³ bar.

4. Dispositif selon la revendication 1, caractérisé en ce que la grandeur (6) de commande de la dépression est amenée à un robinet asservi (7) qui commande la dépression d'une pompe aspirante travaillant à dépression constante.

5. Dispositif selon la revendication 4, caractérisé en ce que, pour la commande de la dépression, on utilise une pompe réglable.

6. Dispositif selon la revendication 1, caractérisé en ce qu'un récipient (5) est disposé le plus prêt possible du burin de gravure (2) pour le dépôt du copeau de gravure (3).

7. Dispositif selon la revendication 1, caractérisé en ce que la longueur du tube d'aspiration ne dépasse pas 100 mm.

8. Dispositif selon la revendication 1, caractérisé en ce que la dépression de l'air aspiré est commandée par paliers à partir de la composante de profondeur de la gravure.

9. Dispositif selon la revendication 8, caractérisé en ce que l'on utilise la pression absolue la plus faible dans le cas d'une forte composante de profondeur de gravure et la pression absolue la plus forte dans le cas d'un sillon d'enregistrement vide (Figure 2).

10. Dispositif selon la revendication 9, caractérisé en ce que l'on utilise trois paliers.

Fig. 1

Fig. 2